Europäisches Patentamt

European Patent Office

Office européen des brevets

(19)

(11)  EP 0 544 064 B1

(12)  **EUROPÄISCHE PATENTSCHRIFT**

(45) Veröffentlichungstag und Bekanntmachung des Hinweises auf die Patenterteilung:
   **14.05.1997  Patentblatt 1997/20**

(51) Int Cl.$^6$: **G01N 9/24**

(21) Anmeldenummer: **92114471.3**

(22) Anmeldetag: **25.08.1992**

(54) **Verfahren und Vorrichtung zur im wesentlichen dämpfungsunabhängigen Messung der Dichte von Flüssigkeiten mittels Ultraschall**

Procedure and apparatus for the essentially damping-independent measurement of the density of liquids by ultrasound

Procédé et appareil pour une mesure de la densité des liquides au moyen d'ultrasons qui soit pratiquement indépendante de l'armortissment

(84) Benannte Vertragsstaaten:
   **AT BE DE DK FR GB IT NL**

(30) Priorität: **30.09.1991  DE 4132527**

(43) Veröffentlichungstag der Anmeldung:
   **02.06.1993  Patentblatt 1993/22**

(73) Patentinhaber: **SIEMENS AKTIENGESELLSCHAFT 80333 München (DE)**

(72) Erfinder:
   • **Màgori, Valentin, Dipl.-Phys. W-8000 München 90 (DE)**
   • **Fischer, Bernhard, Phys. W-8000 München 90 (DE)**

(56) Entgegenhaltungen:
   **EP-A- 012 788**          **DD-A- 289 338**

**Beschreibung**

Die vorliegende Erfindung betrifft ein Verfahren und eine Vorrichtung zur im wesentlichen dämpfungsunabhängigen Messung der Dichte von Flüssigkeiten mittels Ultraschall.

Ein Meßverfahren der eingangs genannten Art ist bisher nicht bekannt geworden.

Ein bereits vorgeschlagenes Verfahren weist den Nachteil auf, daß die Flüssigkeit durchstrahlt werden muß. Wenn dabei die akustische Dämpfung nicht vernachlässigt werden kann, entstehen Fehler bei der Dichtebestimmung. Mit realistischen Randbedingungen (Meßkammer aus Stahl, Meßstrecke ca. 10 cm) errechnen sich Abweichungen vom wahren Wert, die zwischen 4% bei schwacher Dämpfung ($\alpha = 20 * cm * N * 10^{17}$, z. B. Wasser) und 180% bei starker Dämpfung ($\alpha = 1000 \ cm * N * 10^{17}$, z. B. Benzol) liegen.

Weitere Verfahren zur Messung der Dichte von Flüssigkeiten mittels Ultraschall sind aus DD-A-289338 und EP-A-12788 bekannt. DD-A-289338 offenbart ein Verfahren und eine Anordnung zur Bestimmung der Dichte eines Fluids, worin die Reflexion einer akustischen Welle an der Grenzfläche flüssig/fest allein oder auch in Verbindung mit der durchgehenden Longitudinalwelle genutzt wird. Der jewige Einstrahlwinkel, der einen Null- oder Minimumwert ergibt, wird gemessen. EP-A-12 788 offenbart ein Verfahren und eine Vorrichtung zur Bestimmung der Dichte eines Fluids durch den Vergleich zwischen den akustischen Parametern einer Referenz flüssigkeit und einer Probe.

Die akustische Reflexion R an einer Grenzschicht ist nur von den Impedanzen $Z_i$ von zwei die Grenzschicht bildenden Medien abhängig:

$$R = (m - 1)^2 / (m + 1)^2 \qquad (1)$$

$$M = Z_1/Z_2 \qquad (2)$$

$$Zi = \rho_i * c_i \qquad (3)$$

Dabei bedeutet

m: Impedanzverhältnis
$\rho$: spezifische Dichte
c: Schallgeschwindigkeit

Zugleich ist jedoch R als Quotient aus rückgestreuter zu eingestrahlter Intensität definiert:

$$R = i_1/i_0 \qquad (4)$$

Bei bekannter Wandlerimpedanz kann deshalb aus Reflexion und Schallgeschwindigkeit im flüssigen Medium die spezifischen Dichte der Flüssigkeit berechnet werden:

$$\rho_F = \rho_W * c_W/c_F * (1 - \sqrt{R}\ )/(1 + \sqrt{R}\ ) \qquad (5)$$

Index F: Flüssigkeit
Index w: Wand

Meßprinzip:

Soll die spezifische Dichte nach (5) bestimmt werden, so tritt in vielen Fällen die Schwierigkeit auf, daß die eingestrahlte Intensität $i_0$ und damit die Reflexion R im allgemeinen nicht bekannt bzw. (durch Alterung) veränderlich ist.

Der vorliegenden Erfindung liegt die Aufgabe zugrunde, ein Verfahren der eingangs genannten Art zu schaffen, das es gestattet, die Dichte von Flüssigkeiten im wesentlichen unabhängig von der akustischen Dämpfung mit Ultraschall zu messen.

Zur Lösung dieser Aufgabe wird ein Verfahren nach dem Patentanspruch 1 und eine Vorrichtung nach dem Patentanspruch 4 vorgeschlagen.

Vorteilhafte Weiterbildungen der Erfindung sind durch die in den Unteransprüchen angegebenen Merkmale gekennzeichnet.

Im folgenden wird die Erfindung im einzelnen anhand einer Figur beschrieben.

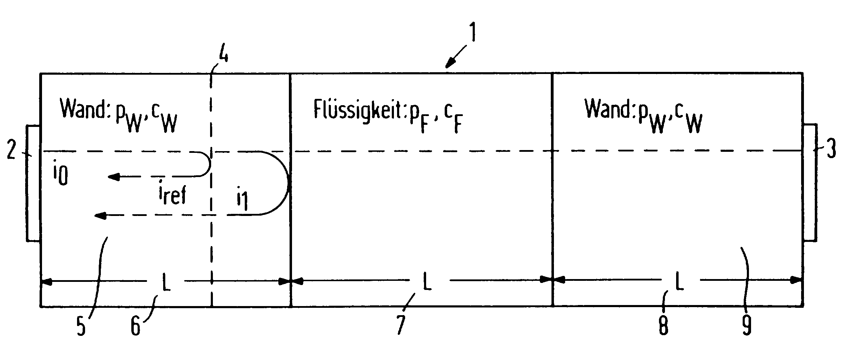

Die Figur zeigt eine Meßkammer 1 mit einem Flüssigkeitsraum 7, der durch eine erste Wand 6 und eine zweite Wand 8 begrenzt ist, wobei die erste Wand 6 einen Reflexionsraum 5 mit einem Referenz-Reflektor 4 und die zweite Wand einen Endraum 9 bildet. An der Außenfläche der ersten Wand 6 ist ein Ultraschall-Sende/Empfangswandler 2 angebracht, und an der Außenfläche der zweiten Wand 8 ist ein Ultraschall-Empfangswandler 3 angebracht.

Um das genannte Problem zu lösen, wird bei der vorliegenden Erfindung durch Herstellung einer Inhomogenität im Weg durch ein erstes Medium (Wand) ein Referenz-Reflektor, nämlich der Referenz-Reflektor 4, bereitgestellt. Dieser Referenz-Reflektor liefert ein Referenz-Echo, das proportional zur eingestrahlten Intensität $i_0$ ist.

Am Referenz-Reflektor wird ein fester Anteil der von dem Sende/Empfangswandler in die Meßkammer eingestrahlten Intensität $i_0$ reflektiert. Dieser Anteil $i_{ref}$ ermöglicht es, $i_0$ zu erfassen und damit die Reflexion R $= i_1/(i_0 - i_{ref})$ der Grenzschicht "Wand/Flüssigkeit" direkt zu bestimmen. Aus der Reflexion und der Schallgeschwindigkeit in der Flüssigkeit $c_F$ läßt sich bei bekannter Wandimpedanz $Z_w = \rho_w c_w$ die Dichte der Flüssigkeit $\rho_F$ bestimmen.

Damit bei starker Dämpfung die Flüssigkeit nur einmal durchschallt werden muß, wird für die Laufzeitmessung ein zweiter Wandler, nämlich der Empfangswandler, benutzt.

Das Referenz-Echo wird erfindungsgemäß zur Bewertung des die Information über den Schallwellenwiderstandssprung enthaltenden Echos zwischen Wand und Flüssigkeit herangezogen. Diese Bewertung könnte direkt mittels eines Rechners oder entsprechend einer Ausgestaltung der Erfindung dadurch erfolgen, daß die Intensität des Referenzechos und damit von $i_0$ durch Regelung der dem Wandler während des Sendens zugeführten Leistung auf einen vorgegebenen Wert gebracht wird.

Nachdem $i_0$ bekannt ist, kann aus einer einzigen gemessenen Echo-Amplitude die Reflexion der Grenzschicht Wand/Flüssigkeit bestimmt werden.

Wenn der Referenz-Reflektor eine flächenhaft und dafür entsprechend schwach reflektierende Schicht ist, dann ist seine Positionierung im Nahfeld des Ultraschall-Wandlers unkritisch. Eine Durchschallung der Flüssigkeit erfolgt nur noch für die Messung der Schallgeschwindigkeit. Dabei muß jedoch keine Genauigkeit erreicht werden. Es genügt deshalb die Erzeugung eines vom Hintergrund unterscheidbaren Signals.

Die Anordnung kann eine bekannte oder berechenbare Reflexion des Referenz-Reflektors voraussetzen. Dazu kann ggf. eine einmalige Kalibrierung mit einer Flüssigkeit bekannter Dichte vorgenommen werden. Diese kann bei der Herstellung der Meßkammer erfolgen.

Das erfindungsgemäße Verfahren bietet die im folgenden angegebenen Vorteile:

- Da für die Bestimmung der Reflexion keine Durchschallung der Flüssigkeit notwendig ist, spielt die akustische Dämpfung praktisch keine Rolle;

- eine etwaige Alterung des Systems wird automatisch kompensiert, da das Referenz-Echo zur eingestrahlten Intensität $i_0$ proportional ist;

- durch Auswertung weiterer Echos, deren Intensität im Idealfall vorhersagbar ist, läßt sich außerdem die akustische Dämpfung der Flüssigkeit erfassen.

Hinsichtlich der Ausgestaltung des Referenz-Reflektors 4 bestehen verschiedene Möglichkeiten: Der Referenz-Reflektor kann ausgebildet sein als

- Übergang "Wand/Wand'";
(Vorteile: Die Reflexion ist berechenbar; es ist eine Impedanzanpasung möglich; es ist das "clamp-on"-Verfahren einsetzbar);

- Übergang "Wand/Zwischenlage/Wand"
(Vorteile: Es ist eine sehr gute Impedanzanpassung möglich; es ist eine gute Eignung für das "clamp-on"-Verfahren gegeben);

- Bohrung(en)

(Vorteil: Die Reflexion ist als R = 1 bekannt);

- plane Grenzfläche
(Vorteile: Die Herstellung ist einfach; das Nahfeld ist unkritisch);

- Kreisring-Grenzfläche
(Vorteile: Die Herstellung ist einfach; das Nahfeld ist wenig kritisch);

- Grenzfläche, die im wesentlichen konvex ist
(Vorteile: Es ergibt sich eine Linsenwirkung; die Intensitäten, die ohnehin für die Messung verloren wären, können genutzt werden).

**Patentansprüche**

1. Verfahren zur im wesentlichen dämpfungsunabhängigen Messung der Dichte von Flüssigkeiten mittels Ultraschall, bei dem von einem Ultraschall-(US-) Sende/Empfangswandler (2) ein US-Strahl durch eine Meßkammer (1) in Richtung auf einen US-Empfangswandler (3) ausgesendet wird, wobei der US-Strahl auf seinem Weg zu dem US-Empfangswandler (3) vor seinem Durchtreten durch eine hinsichtlich ihrer Dichte zu messende Flüssigkeit einen Referenz-Reflektor (4) zu durchlaufen hat, der ein Referenz-Echo an den US-Sende/Empfangswandler (2) abgibt, das proportional zu der eingestrahlten Intensität ($i_0$) des US-Strahls ist, und daß das Referenz-Echo zur Bewertung des Information über einen Schallwellenwiderstandssprung enthaltenden Echos zwischen der betreffenden Wand (6) der Meßkammer (1) und der Flüssigkeit in einem Flüssigkeitsraum (7) der Meßkammer (1) herangezogen wird, womit, nachdem die eingestellte Intensität ($i_0$) des US-Strahls bekannt ist, aus einer einzigen gemessenen Echo-Amplitude die Reflexion der Grenzschicht "Wand/Flüssigkeit" bestimmt werden kann.

2. Verfahren nach Anspruch 1, dadurch **gekennzeichnet,** daß die Bewertung in der Weise durchgeführt wird, daß die Intensität des Referenz-Echos und damit die eingestrahlte Intensität ($i_0$) durch Regelung der dem US-Sende/Empfangswandler (2) während des Sendevorgangs zugeführten Leistung auf einen vorgegebenen Wert eingestellt wird.

3. Verfahren nach Anspruch 1, dadurch **gekennzeichnet,** daß die Bewertung direkt mittels eines Rechners unter Benutzung eines vorgegebenen Algorithmus durchgeführt wird.

4. Vorrichtung zur Durchführung eines Verfahrens zur im wesentlichen dämpfungsunabhängigen Messung der Dichte von Flüssigkeiten mittels Ultraschall, bei dem von einem Ultraschall-(US-) Sende/ Empfangswandler (2) ein US-Strahl durch eine Meßkammer (1) in Richtung auf einen US-Empfangswandler (3) ausgesendet wird, wobei der US-Strahl auf seinem Weg zu dem US-Empfangswandler (3) vor seinem Durchtreten durch eine hinsichtlich ihrer Dichte zu messende Flüssigkeit einen Referenz-Reflektor (4) zu durchlaufen hat, der ein Referenz-Echo an den US-Sende/Empfangswandler (2) abgibt, das proportional zu der eingestrahlten Intensität ($i_0$) des US-Strahls ist, und bei dem das Referenz-Echo zur Bewertung des Information über einen Schallwellenwiderstandssprung enthaltenden Echos zwischen der betreffenden Wand (6) der Meßkammer (1) und der Flüssigkeit in einem Flüssigkeitsraum (7) der Meßkammer (1) herangezogen wird, womit, nachdem die eingestellte Intensität ($i_0$) des US-Strahls bekannt ist, aus einer einzigen gemessenen Echo-Amplitude die Reflexion der Grenzschicht "Wand/Flüssigkeit" bestimmt werden kann, wobei der Flüssigkeitsraum (7) der Meßkammer (1) durch die Wand (6) und eine weitere Wand (8) begrenzt ist, wobei der US-Sende/Empfangswandler (2) an der Außenfläche der einen Wand (6) angebracht ist und der US-Empfangswandler (3) an der Außenfläche der weiteren Wand (8) angebracht ist, und wobei der Referenz-Reflektor (4) mit der einen Wand (6) eine Einheit bildet.

5. Vorrichtung nach Anspruch 4, dadurch **gekennzeichnet,** daß der Referenz-Reflektor (4) als ein Übergang "Wand/Wand" ausgebildet ist.

6. Vorrichtung nach Anspruch 4, dadurch **gekennzeichnet,** daß der Referenz-Reflektor (4) als ein Übergang "Wand/Zwischenlage/Wand" ausgebildet ist.

7. Vorrichtung nach Anspruch 4, dadurch **gekennzeichnet,** daß der Referenz-Reflektor (4) in Form zumindest einer Bohrung ausgebildet ist.

8. Vorrichtung nach Anspruch 4, dadurch **gekennzeichnet,** daß der Referenz-Reflektor (4) als eine plane Grenzfläche ausgebildet ist.

9. Vorrichtung nach Anspruch 4, dadurch **gekennzeichnet,** daß der Referenz-Reflektor (4) als Kreisring-Grenzfläche ausgebildet ist

10. Vorrichtung nach Anspruch 4, dadurch **gekennzeichnet,** daß der Referenz-Reflektor (4) als eine Grenzfläche, die im wesentlichen konvex ist, ausgebildet ist.

**Claims**

1. Method for essentially attenuation-independent measurement of the density of liquids using ultrasound, in which an ultrasound (US) beam is transmitted by an US transmit/receive transducer (2) through a measuring chamber (1) in the direction of an US receive transducer (3), the US beam having to pass through a reference reflector (4) on its path to the US receive transducer (3) before it passes through a liquid whose density is to be measured, which reference reflector emits to the US transmit/ receive transducer (2) a reference echo which is proportional to the incident intensity ($i_0$) of the US beam, and in which the reference echo is employed between the relevant wall (6) of the measuring chamber (1) and the liquid in a liquid space (7) of the measuring chamber (1) to evaluate the echo containing information relating to a discontinuity in acoustic impedance, by means of which, after the incident intensity ($i_0$) of the US beam is known, the reflection of the "wall/liquid" boundary layer can be determined from a single measured echo amplitude.

2. Method according to Claim 1, characterized in that the evaluation is carried out such that the intensity of the reference echo, and therefore the incident intensity ($i_0$) is adjusted to a predetermined value by controlling the power delivered to the US transmit/ receive transducer (2) during the transmission process.

3. Method according to Claim 1, characterized in that the evaluation is carried out directly using a computer by employing a predetermined algorithm.

4. Device for carrying out a method for essentially attenuation-independent measurement of the density of liquids using ultrasound, in which an ultrasound (US) beam is transmitted by an US transmit/receive transducer (2) through a measuring chamber (1) in the direction of an US receive transducer (3), the US beam having to pass through a reference reflector (4) on its path to the US receive transducer (3) before it passes through a liquid whose density is to be measured, which reference reflector emits to the US transmit/receive transducer (2) a reference echo which is proportional to the incident intensity ($i_0$) of the US beam, and in which the reference echo is employed between the relevant wall (6) of the measuring chamber (1) and the liquid in a liquid space (7) of the measuring chamber (1) to evaluate the echo containing information relating to a discontinuity in acoustic impedance, by means of which, after the incident intensity ($i_0$) of the US beam is known, the reflection of the "wall/liquid" boundary layer can be determined from a single measured echo amplitude, the liquid space (7) of the measuring chamber (1) being bounded by the wall (6) and a further wall (8), the US transmit/receive transducer (2) being fitted to the external face of a wall (6) and the US receive transducer (3) being fitted to the external face of the further wall (8), and the reference reflector (4) forming a unit with the one wall (6).

5. Device according to Claim 4, characterized in that the reference reflector (4) is designed as a "wall/wall" transition.

6. Device according to Claim 4, characterized in that the reference reflector (4) is designed as a "wall/intermediate-layer/wall" transition.

7. Device according to Claim 4, characterized in that the reference reflector (4) is designed in the form of at least one bore.

8. Device according to Claim 4, characterized in that the reference reflector (4) is designed as a plane interface.

9. Device according to Claim 4, characterized in that the reference reflector (4) is designed as an annular interface.

10. Device according to Claim 4, characterized in that the reference reflector (4) is designed as an interface which is essentially convex.

**Revendications**

1. Procédé pour une mesure de la densité des liquides au moyen d'ultrasons qui soit pratiquement indépendante de l'amortissement, dans lequel un rayon ultrasonore est émis par un convertisseur d'émission/réception ultrasonore (2) à travers une chambre de mesure (1) en direction d'un convertisseur de réception ultrasonore (3), le rayon ultrasonore devant, sur son parcours vers le convertisseur de réception ultrasonore, avant de traverser un liquide dont la densité doit être mesurée, passer à travers un réflecteur de référence (4), qui délivre un écho de référence au convertisseur d'émission/réception ultrasonore (2), qui est proportionnel à l'intensité $(i_0)$ diffusée du rayon ultrasonore, et dans lequel on a recours à l'écho de référence pour évaluer l'écho contenant l'information sur un saut d'impédance acoustique caractéristique entre la paroi concernée (6) de la chambre de mesure (1) et le liquide dans un espace à liquide (7) de la chambre de mesure (1), ce qui, après que l'intensité ajustée $(i_0)$ du rayon ultrasonore soit connue, permet de déterminer la réflexion de la couche limite "paroi/liquide" à partir d'une seule et unique amplitude de l'écho mesurée.

2. Procédé selon la revendication 1, **caractérisé en ce que** l'évaluation s'effectue de telle manière que l'intensité de l'écho de référence, et ainsi l'intensité diffusée $(i_0)$, est ajustée en réglant à une valeur prédéfinie la puissance alimentant le convertisseur d'émission/réception (2) ultrasonore pendant l'émission.

3. Procédé selon la revendication 1, **caractérisé en ce que** l'évaluation s'effectue directement au moyen d'un ordinateur en utilisant un algorithme prédéfini.

4. Appareil d'exécution d'un procédé pour une mesure de la densité des liquides au moyen d'ultrasons qui soit pratiquement indépendante de l'amortissement, dans lequel un rayon ultrasonore est émis par un convertisseur d'émission/réception (2) ultrasonore à travers une chambre de mesure (1) en direction d'un convertisseur de réception ultrasonore (3), le rayon ultrasonore devant, sur son parcours vers le convertisseur de réception ultrasonore, avant de traverser un liquide dont la densité doit être mesurée, passer à travers un réflecteur de référence (4), qui délivre un écho de référence au convertisseur d'émission/réception ultrasonore (2), qui est proportionnel à l'intensité $(i_0)$ diffusée du rayon ultrasonore, et dans lequel on a recours à l'écho de référence pour évaluer l'écho contenant l'information sur un saut d'impédance acoustique caractéristique entre la paroi concernée (6) de la chambre de mesure (1) et le liquide dans un espace à liquide (7) de la chambre de mesure (1), ce qui, après que l'intensité ajustée $(i_0)$ du rayon ultrasonore soit connue, permet de déterminer la réflexion de la couche limite "paroi/liquide" à partir d'une amplitude de l'écho seule et unique mesurée, l'espace à liquide (7) de la chambre de mesure (1) étant limité par la paroi (6) et une autre paroi (8), le convertisseur d'émission/réception ultrasonore (2) étant monté à la face extérieure de l'une des parois (6) et le convertisseur de réception ultrasonore (3) étant monté à la face extérieure de l'autre paroi (8), et le réflecteur de référence (4) formant une unité avec l'une des parois (6).

5. Appareil selon la revendication 4, **caractérisé en ce que** le réflecteur de référence (4) est exécuté comme un passage "paroi/paroi".

6. Appareil selon la revendication 4, **caractérisé en ce que** le réflecteur de référence (4) est exécuté comme un passage "paroi/couche intermédiaire/paroi".

7. Appareil selon la revendication 4, **caractérisé en ce que** le réflecteur de référence (4) est exécuté sous forme d'au moins un alésage.

8. Appareil selon la revendication 4, **caractérisé en ce que** le réflecteur de référence (4) est exécuté comme une interface plane.

9. Appareil selon la revendication 4, **caractérisé en ce que** le réflecteur de référence (4) est exécuté comme une interface en couronne circulaire.

10. Appareil selon la revendication 4, **caractérisé en ce que** le réflecteur de référence (4) est exécuté comme une interface essentiellement convexe.